# EUROPEAN PATENT APPLICATION

(11) **EP 4 826 470 A1**
(43) Date of publication of application: **21.10.2026**
(21) Application number: 25171375.6
(22) Date of filing: 17.04.2025
(51) Int. Cl.: G05B 13/04, G06N 7/01

(54) **METHOD FOR CONTROLLING A PHYSICAL OR CHEMICAL PROCESS USING A MULTI-OBJECTIVE BAYESI-AN OPTIMIZATION MODEL**

(71) Applicant: Robert Bosch GmbH, 70442 Stuttgart (DE)
(72) Inventor: Papenmeier, Leonard, 26136 Landskrona (SE); Tighineanu, Petru, 70825 Korntal-Muenchingen (DE)

(57) **Abstract**

Various aspects relate to a method including: for each of multiple meta-task dataset meta-task datasets, determining a meta-task Gaussian process, GP, that represents multiple objective functions and models a respective other process related to a technical process by a meta-task mean and covariance; determining a prior GP of a target-task multi-objective model representing the multiple objective functions with a prior mean that is a weighted sum of the meta-task means and a prior covariance that is a total of a target-task covariance and a weighted sum of the meta-task co-variances, wherein weights for the weighting include a weight for each combination of the multiple objective functions and the meta-task datasets; determining an adapted GP by adapting hyperparameters of the prior GP; determining a posterior GP of the target-task multi-objective model by conditioning the adapted GP on a target-task dataset; and controlling the physical or chemical process using the posterior GP.

## Description

### Prior Art

For various technical (e.g., physical or chemical ) processes, such as a production process and/or machining process (e.g. drilling, milling, heat treatment, etc.), process parameters (e.g. a process temperature, a process time, a vacuum or a gas atmosphere, etc.) of the technical process are set to achieve desired properties (e.g., hardness, strength, thermal conductivity, electrical conductivity, density, microstructure, macrostructure, chemical composition, etc.).

The process parameters can be determined by model-based optimization methods, such as Bayesian optimization methods. In this case, the technical process can be modelled on the basis of measurement data and/or simulation data. However, this may require a high amount of measurement and/or simulation data leading to a high effort (e.g. in terms of time and/or cost). This effort may be reduced by determining the model using data of other technical processes that are related to the technical process in combination with the measurement data and/or simulation data of the technical process (which is known as transfer-learning or meta-learning). For example, both models may describe a drilling or milling process on different machines (and with comparable process parameters) and the measurement data obtained on both machines may be employed when learning the model that is to describe the technical process.

In the case of multi-objective Bayesian optimization, viz. in the case that there are multiple objective functions (short: objectives) to be optimized, there is still a high effort even when using transfer learning.

### Disclosure of the Invention

The present disclosure relates to a method that uses a multi-objective Bayesian optimization model for controlling a physical or chemical process. For this multi-objective Bayesian optimization model a Gaussian process (GP) is learned from data efficiently using transfer learning (by having a reduced computational complexity as compared to other approaches).

The multi-objective Bayesian optimization model detailed herein learns correlations between the multiple objectives during optimization. Typically, transfer-learning multi-objective models learn one single-objective model for each objective function. In contrast to learning one single-objective Bayesian optimization model per objective function, the multi-objective Bayesian optimization model detailed herein has an enhanced model quality (e.g., an increased accuracy and/or can be learned with less measurement and/or simulation data) resulting from the learned correlations between the multiple objectives. Hence, learning one single-objective Bayesian optimization model for each objective function, such as described in P. Tighineanu: "Scalable Meta-Learning with Gaussian Processes", arXiv:2312.00742, 2023 (in the following referred to as reference [1]), and using the in combination to solve the multi-objective task, leads to a significant lower accuracy as compared to the multi-objective Bayesian optimization approach detailed herein.

Thus, the multi-objective Bayesian optimization approach is particularly important for expensive-to-evaluate black-box functions, where measurements are costly.

For example, when learning the correlations between the multiple objectives, if *O* objective functions correlate perfectly, then learning about one of the functions is sufficient to know how the other *O* - 1 behave. If correlations are not learned, then all 0 functions need to be learned independently, requiring more measurements and lowering the data efficiency.

The multi-objective Bayesian optimization approach is data efficient because an uncertainty of the meta-task models is propagated to a target-task model in a principled way, making it very suitable in scenarios of scarce and/or noisy data. Further, it can be implemented efficiently due to its modularity in that meta-task models can be learned individually (e.g., concurrently or simultaneously).

Various aspects related to a method for controlling a physical or chemical process, the method including: providing a plurality of meta-task datasets, wherein each meta-task dataset of the plurality of meta-task datasets includes measurement data points and/or simulation data points of a respective other (physical or chemical) process related to the physical or chemical process; for each meta-task dataset of the plurality of meta-task datasets, determining a respective meta-task multi-objective model (being conditioned on the meta-task dataset and) including a (respective) meta-task Gaussian process that represents multiple objective functions and models the respective other process by a meta-task (posterior) mean function and a meta-task (posterior) (multi-objective) covariance function; determining a prior Gaussian process of a target-task multi-objective model that represents the multiple objective functions, wherein a (target-task) prior mean function of the prior Gaussian process is a weighted sum of the meta-task mean functions using a plurality of weights, and wherein a (target-task) prior (multi-objective) covariance function of the prior Gaussian process is a total of a target-task (multi-objective) covariance function and a weighted sum of the meta-task covariance functions using the plurality of weights, wherein the plurality of weights includes a respective weight for each combination of an objective function of the multiple objective functions and a meta-task dataset of the plurality of meta-task datasets; determining an adapted (e.g., hyperparameter-optimized) prior Gaussian process by adapting (e.g., optimizing) hyperparameters of the prior Gaussian process to increase a (e.g., log marginal) likelihood of a target-task dataset which includes measurement data points and/or simulation data points of the physical or chemical process; determining a posterior Gaussian process of the target-task multi-objective model by conditioning the adapted prior Gaussian process on the target task dataset; and controlling the physical or chemical process using the posterior Gaussian process.

In the following, various examples are described.

Example 1 is the method for controlling a physical or chemical process as described above.

In Example 2, the subject matter of Example 1 can optionally include that controlling the physical or chemical process using the posterior Gaussian process includes: determining a respective input parameter value of one or more input parameters of the physical or chemical process by applying a multi-objective acquisition function on the posterior Gaussian process; and controlling the physical or chemical process in accordance with the respective input parameter value of the one or more input parameters.

Hence, the target-task multi-objective model may be further optimized by selecting a next measurement point that is to be evaluated. This Example may further include: acquiring (e.g., measuring) a respective output parameter value of one or more output parameters of the physical or chemical process to thereby generate a new target task data point, and conditioning the adapted prior Gaussian process on the target-task dataset and the new target task data point.

In Example 3, the subject matter of Example 1 can optionally include that controlling the physical or chemical process using the posterior Gaussian process includes: determining Pareto-optimal points which are, according to the posterior Gaussian process, assigned to a desired output value of at least one output parameter of the physical or chemical process, wherein each of the Pareto-optimal points includes a respective input parameter value of one or more input parameters of the physical or chemical process; selecting a Pareto-optimal point of the Pareto-optimal points (e.g., using a decision maker, for example, based on preference information); and controlling the physical or chemical process in accordance with the Pareto-optimal point.

Illustratively, the target-task multi-objective model (viz. its posterior Gaussian process) may be employed (in use) to determine input parameter values to achieve desired output parameter values.

In Example 4, the subject matter of any one of Examples 1 to 3 can optionally include that the hyperparameters include the target-task covariance function and the plurality of weights.

Illustratively, during hyperparameter optimization, the target-task covariance function and the plurality of weights may be learned (e.g., optimized) such that the prior Gaussian process describes (e.g., contains) the plurality of meta-task datasets.

In Example 5, the subject matter of any one of Examples 1 to 4 can optionally include that each weight of the plurality of weights is equal to or greater than zero.

The weights of the plurality of weights may vary within a same range (e.g., in a range from zero to one).

In the case of the multiple objective functions not all of the meta-task multi-objective models may suitably contribute to all objective functions. By allowing weights to be zero, such non-contributing parts can be cancelled, thereby improving the accuracy of the target-task multi-objective model.

In Example 6, the subject matter of any one of Examples 1 to 5 can optionally include that determining the weighted sum of the meta-task covariance functions using the plurality of weights includes that, for each meta-task dataset of the plurality of meta-task datasets, a covariance between two objective functions is weighted by a product of a first weight and a second weight associated with the meta-task dataset, wherein the first weight is associated with one of the two objective functions and the second weight is associated with the other one of the two objective functions.

Example 7 is a controller configured to carry out the method of any one of Examples 1 to 6.

Example 8 is a (technical) system including: a device configured to carry out the physical or chemical process; and the controller according to Example 7.

Example 9 is a computer program including instructions which, when executed by a computer, causes the computer to carry out the method according to any one of Examples 1 to 6.

Example 10 is a computer-readable medium including instructions which, when executed by a computer, causes the computer to carry out the method according to any one of Examples 1 to 6.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
Figures 1A and 1B show an exemplary system controllable using a Bayesian optimization model according to various aspects; and
Figure 2 shows a flow diagram of a method for controlling a physical or chemical process according to various aspects.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

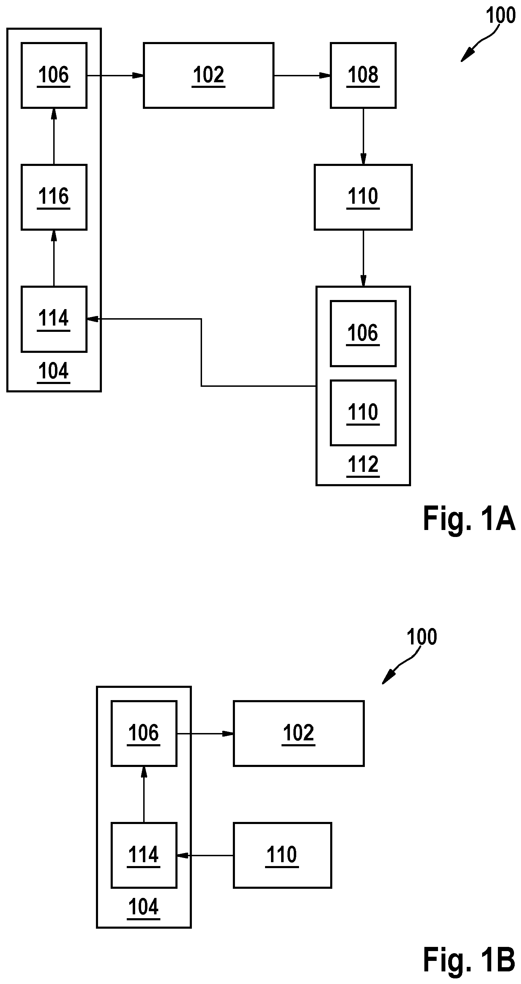

**FIG.1A** and **FIG.1B** show an exemplary technical system 100 that is controllable using a Bayesian optimization model according to various aspects.

The technical system 100 may include a device 102 configured to carry out a technical process. In the following, the device 102 is exemplarily described as a robot device 102. The robot device 102 may be any kind of (computer-controlled) technical device configured to carry out a technical process, such as a robot (e.g., a manufacturing robot, a maintenance robot, a domestic robot, a medical robot, a craft appliance (e.g. a drill), etc.), a vehicle (e.g., an at least partially automated (e.g., autonomous) vehicle), a domestic appliance, a production machine, a personal assistant, an access control system, etc., as well as any other type of robot device.

The technical process may be a physical or chemical process, such as, for example, a manufacturing process (e.g., manufacturing a product or intermediate product), a machining process (e.g., machining a workpiece), a control process (e.g., moving a robot arm), a setting process (e.g., calibrating a measuring apparatus), etc.

For control of the robot device 102, the technical system 100 may include a robot device controller (short: controller) 104. The controller 104 may be configured to control (an operation of) the robot device 102 (according to a control program). The term "controller" may be understood as any type of logic implementing entity, which may include, for example, a circuit and/or a processor capable of executing software stored in a storage medium, firmware, or a combination thereof, and which can provide instructions, e.g. to an actuator in the present example. The controller may be configured, for example, by program code (e.g., software) to control the operation of the system 100 (e.g., the robot device 102).

The controller 104 may be configured to control the robot device 102 in accordance with a plurality of input parameters 106 (which may also be referred to as input variables). Hence, the controller 104 may control the robot device 102 according to a respective input parameter value of each input parameter 106 of the plurality of input parameters 106. An input parameter, as used herein, may be a physical parameter or a chemical parameter or a control parameter or any other kind of parameter describing the technical system 100.

A result of the technical process may be acquired using one or more sensors 108. The one or more sensors 108 may be configured to acquire a respective output parameter value for each output parameter of one or more output parameters 110 (which may also be referred to as output variables). An output parameter, as used herein, may be a parameter that describes an output of the technical process. An output parameter of the technical process may be a property of a product, workpiece, captured image or other result. The output parameter may have an application-specific quality criterion. The output parameter may be a component-related parameter, such as a dimension or a layer thickness, or may be a material-related parameter, such as hardness, thermal conductivity, electrical conductivity, density, chemical composition, etc. The output parameter may be a success or failure of a skill of a robot (e.g. grasping an object).

As an example, the robot device 102 may be a drilling machine controlled to drill a hole. Hence, the technical process may be drilling of a hole. An input parameter may, for example, be a physical parameter, such as a temperature of a cooling liquid used during drilling the hole, a rotation speed of a drill bit, etc., or may be a control parameter, such as a voltage applied to a unit of the robot device 102 (e.g., an actuator which is configured to rotate the drill bit according to the applied voltage). An output parameter may be a smoothness of the drilled hole, a diameter of the drilled hole, or any other property of the drilled hole.

As another example, the technical process may be a production or manufacturing process for manufacturing a workpiece carried out in a processing chamber. In this example, an input parameter may, for example, be a temperature of the workpiece during the technical process, a voltage applied to an actuator, or a chemical parameter, a concentration or (partial) pressure of a processing gas within the processing chamber, etc. An input parameter may also be another parameter representing the technical process, such as an opening of a valve that is configured to regulate an inlet of the processing gas. Hence, the opening of the valve may indicate a (partial) pressure of the processing gas.

As an even further example, the technical process may be a laser welding process where two workpieces are joined together by shining a high-power laser beam at their interface. The laser melts this area, which then solidifies after the beam moves away. Input parameters may be a laser power, a beam diameter, etc. and the output parameters may represent a desired process quality, such as amount of spatter, and/or a desired welding geometry. In this example, the amount of spatter and the desired welding geometry may be two objectives.

It is understood that these are examples for illustration and that the technical process may be any other kind of technical process, such as another production or machining process (e.g. milling, heat treatment), a technical process of a vehicle as robot device (with an input parameter or an output parameter being e.g., a braking force, a velocity, etc.), etc.

The respective output parameter value of each output parameter of the one or more output parameters may be acquired (using the one or more sensors 108) during carrying out the technical process (viz. in-situ) and/or after carrying out the technical process (viz. ex-situ). Thus, in the example of the technical process being a production or manufacturing process carried out in the processing chamber (viz. in-situ), the output parameter acquired during the process may be a temperature of the workpiece during manufacturing. As an ex-situ example, the technical process may be a hardening of a workpiece in an oven with a temperature as an input parameter and an output parameter may be a hardness of the workpiece at room temperature after the hardening process.

Illustratively, the input parameter values of the plurality of input parameters 106 and the output parameter value(s) of the one or more output parameters 110 form a measurement point 112.

A Bayesian optimization model 114 may include a Gaussian process that is conditioned on a plurality of such measurement points 112 to model the technical process carried out by the robot device 102. Illustratively, the Bayesian optimization model 114 may describe a relation between input parameters and output parameters of the technical process.

With reference to FIG.1A, during learning (e.g., optimizing) the Bayesian optimization model 114, new input parameter values 116 of the plurality of input parameters may be determined by applying an acquisition function on the Bayesian optimization model 114. Then, the robot device 102 is controlled according to these new input parameter values 116 and the output parameter value(s) of the one or more output parameters 110 are measured, thereby acquiring a new measurement point. Then, the Bayesian optimization model 114 is conditioned on this new measurement point as well and as long as the learning is not finished, further new input parameter values 116 may be determined using the acquisition function.

With reference to FIG.1B, once the Bayesian optimization model 114 is learned, desired output parameter value(s) of the one or more output parameters 110 may be input into the Bayesian optimization model 114 to determine which input parameter values of the plurality of input parameters 106 are expected to lead to the desired output parameter value(s). Optionally, the actually achieved output parameter value(s) may be measured using the one or more sensors 108 and may be compared to the desired output parameter value(s) (e.g., as part of quality monitoring).

As detailed herein, the Bayesian optimization model 114 may be set up using measurement and/or simulation of another process related to the technical process. It is understood that the other process related to the technical process being a physical or chemical process may also be a physical or chemical process as described herein.

Although, various aspects refer to the technical process as being a physical or chemical process, it is understood that this serves for illustration and that the technical process may be any kind of technical process in general. For example, the technical process may be a configuration process for configuring a system that is to be configured. As an example, this system that is to be configured may be the robot device 102 configured to carry out the technical process. In other aspects, the configuration process may be a configuration of a machine learning model, such as a hyperparameter optimization of the machine learning model.

Two processes may be related in a number of ways. For example, they may be the same general process, such as a component drilling or milling process, performed by different machines. It is understood that even a generally the same process on different machines can lead to individualized results. Two processes carried out on the same machine may also be related. As an example, one process may be drilling a metallic component and another process may be drilling a ceramic component. As another example, the two processes may be a same process carried out on a same machine but at different daytime (which can result in differences, e.g. due to temperature, air pressure, etc.). In general, two processes may be related if their input parameters at least partially overlap and their output parameters at least partially overlap. Two related processes may have one or more identical input parameters (e.g. a process temperature, a process time and/or a vacuum pressure in the case of heat treatment) and one or more identical output parameters (e.g. a hardness, a strength, a density, a microstructure, a macrostructure and/or a chemical composition in the case of heat treatment). Two processes are related if their respective models are suitable for transfer learning. In the case of the hyperparameter optimization of the machine learning model, the related process may be a configuration of a machine-learning model trained on a similar task. Hence, the device 102 may be the robot device configured to carry out the physical or chemical process or may be a data processing unit implementing the machine-learning model.

The configuration task associated with the technical process modelled by the Bayesian optimization model 114 may also be referred to as target task. The related (viz. similar) configuration tasks may also be referred to as meta-tasks.

In some scenarios, multiple objective functions shall be optimized. For this, a multi-objective Bayesian optimization model may be used, being a probabilistic model capable of modeling objective functions with multiple outputs. The output of a multi-objective optimization is not one but many potentially optimal parameters., which are called Pareto-optimal points. For a Pareto-optimal point, there is no other point that achieves a better value in one objective without worsening another other objective. According to various aspects, the Bayesian optimization model 114 is a target-task multi-objective (Bayesian optimization) model 114.

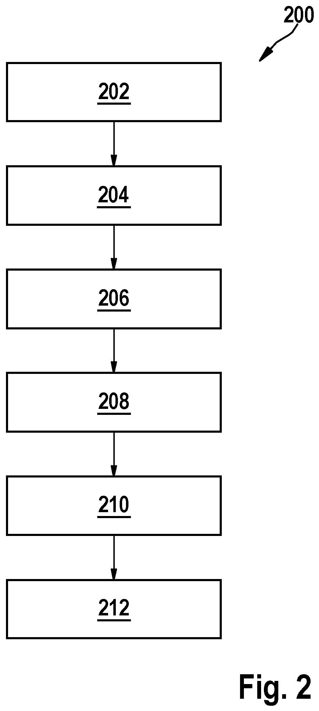

**FIG.2** shows a flow diagram of a method 200 for controlling a physical or chemical process according to various aspects.

The method 200 may (in 202) include providing a plurality of meta-task datasets. Each meta-task dataset of the plurality of meta-task datasets may include measurement data points and/or simulation data points of a respective other (physical or chemical) process related to the physical or chemical process.

The method 200 may (in 204) include, for each meta-task dataset of the plurality of meta-task datasets, determining a respective meta-task multi-objective model (being conditioned on the meta-task dataset and) including a (respective) meta-task Gaussian process that represents multiple objective functions and models the respective other process by a meta-task (posterior) mean function and a meta-task (posterior) (multi-objective) covariance function. When determining the respective meta-task multi-objective model, the hyperparameters of the respective meta-task multi-objective model may be optimized prior to determining the prior Gaussian process of the target-task multi-objective model (in 206).

The method 200 may (in 206) include determining a prior Gaussian process of a target-task multi-objective model that represents the multiple objective functions. A (target-task) prior mean function of the prior Gaussian process may be a weighted sum of the meta-task mean functions using a plurality of weights, and a (target-task) prior (multi-objective) covariance function of the prior Gaussian process may be a total of a target-task (multi-objective) covariance function and a weighted sum of the meta-task covariance functions using the plurality of weights. The plurality of weights may include a respective weight for each combination of an objective function of the multiple objective functions and a meta-task dataset of the plurality of meta-task datasets.

The method 200 may (in 208) include determining an adapted (e.g., hyperparameter-optimized) prior Gaussian process by adapting (e.g., optimizing) hyperparameters of the prior Gaussian process to increase a (e.g., log marginal) likelihood of a target-task dataset which includes measurement data points and/or simulation data points of the physical or chemical process.

The method 200 may (in 210) include determining a posterior Gaussian process of the target-task multi-objective model by conditioning the adapted prior Gaussian process on the target-task dataset.

The method 200 may (in 212) include controlling the physical or chemical process using the posterior Gaussian process.

Although the method 200 is exemplarily described as controlling a physical or chemical process, it is understood that the method may be accordingly applied to configurating any kind of technical process, such as a hyperparameter optimization of a machine-learning model.

The learning of the posterior Gaussian process, GP, of the target-task multi-objective model according to method 200 can be described by algorithm 1 shown below.

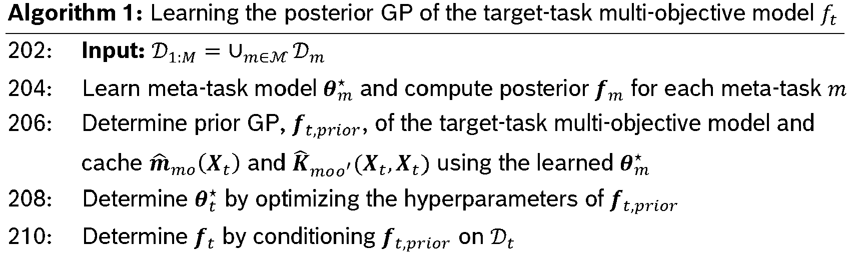

In the following, various aspects of the method 200 and algorithm 1 are described in further detail.

Each meta-task dataset, 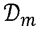 *,* of the plurality of meta-task datasets, 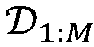 *,* may include measurement and/or simulation data points, {*x_{m,n}, y_{m,n}*}, hence 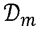 = ${\left\{{x}_{m , n}, {y}_{m , n}\right\}}_{n = 1}^{{N}_{m}}$, wherein the number *Nₘ* of measurement and/or simulation data points may be the same or may be different among the plurality of meta-task datasets, 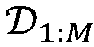 *.*

Further, the target-task dataset, ${D}_{t} = {\left\{{x}_{n}, {y}_{n}\right\}}_{n = 1}^{{N}_{t}}$, may be input (with ***X**ₜ* = (*x*₁*,* ... , *x_{Nₜ}*) and ***Y**ₜ* = (*y*₁*_{,...,}, y_{Nₜ}*)) in 202.

In 204, each meta-task model, ***θ**ₘ,* may be learned as a Gaussian process for the multiple objective functions (*o, o' =* 1,2, ..., *O*) by optimizing a likelihood of the respective meta-task dataset, yielding the optimal hyperparameters ${θ}_{m}^{⋆}$, and then conditioning the prior ***f**_{m,prior}* on the respective meta-task dataset, 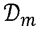 *.* The (posterior) Gaussian process ***f**ₘ* may therefore model the respective other process by a meta-task posterior mean function, *m̂ₘₒ*(***x***), and a meta-task posterior covariance function, *k̂_{moo'}*(***x**, **x**'*). The Gaussian processes of the meta-task models, ***θ**ₘ*, may have a same or different kernels (prior covariance functions). Examples of kernels are a Linear Coregionalization Model (LCM) kernel and an Intrinsic Coregionalization Model (ICM) kernel.

In 206, the prior GP, ***f**_{t,prior},* of the target-task multi-objective model may be constructed according to equation (1): ${f}_{to , prior} \left|{D}_{1 : M},x∼GP\left[{m}_{t}\left(x, o\right),{k}_{t}\left[\left(x, o\right), \left(x′,o′\right)\right]\right]\right.$

With $\begin{matrix}{m}_{t} \left(x, o\right) = {\sum }_{m = 1}^{M} {w}_{mo} {\hat{m}}_{mo} \left(x\right) \\ {k}_{t} \left[\left(x, o\right), \left(x′,o′\right)\right] = {Δ}_{t} \left[\left(x, o\right), \left(x′,o′\right)\right] + {\sum }_{m = 1}^{M} {w}_{mo} {w}_{mo ′} {\hat{k}}_{moo ′} \left(x,x′\right)\end{matrix}$ (1)

As illustratively shown, the mean function, *mₜ*(***x***, *o*), of the target-task multi-objective model may be the weighted sum of the meta-task (posterior) mean functions, *m̂ₘₒ*(*x*), and the covariance function, *kₜ*[(***x**, o),* (***x**', o'*)], of the target-task multi-objective model may be a total (viz. a sum) of the target-task kernel, Δ*ₜ*[(***x**, o*), (*x*'*, o'*)] and the weighted sum of the meta-task covariance functions, *k̂_{moo'}*(***x***, ***x***'). Each meta-task (posterior) mean function, *m̂ₘₒ*(***x***) may be weighted using a weight associated with the objective function, *o*, and the respective meta-task, m. Each meta-task covariance, *k̂_{moo'}*(***x***, ***x***'), covariance between an objective function, *o*, and another objective function, o', may be weighted by a product of the weights associated with the objective function, *o*, and the other objective function, *o'*, for the respective meta-task, *m.*

According to various aspects, the weights, ***w**ₘ*, described herein can be any real number (positive, negative, or zero). Hence, the weights, ***w**ₘ*, are allowed to be adapted (during hyperparameter optimization in 208) to be zero, thereby cancelling the impact of a meta-task, *m,* to a specific objective function in the case that this meta-task, *m,* does not contribute thereto. This allows to increase the accuracy of the target-task multi-objective model and may, for example, allow to employ meta-task datasets that are only contributing to some objective functions, thereby making the approach even more data efficient.

In 208, the hyperparameters of ***θ**ₜ*, may be optimized by adapting them to increase a likelihood of the target-task dataset, e.g., using a log marginal likelihood according to equation (2): ${θ}_{t}^{⋆} = {argmax}_{{θ}_{t}} log p \left({Y}_{t}\left|{D}_{1 : M}, {X}_{t}, {θ}_{t}, {θ}_{m}^{⋆}\right.\right)$ (2)

The hyperparameters that are optimized may include the weights, *wₘₒ*, and the target-task covariance function, Δ*ₜ*[(***x***, o), (***x**', o'*)]. Illustratively, the target-task covariance function, Δ*ₜ*[(***x***, *o*), (***x**'*, *o*')]*,* may represent a difference that cannot be explained by the meta-task models. The target-task covariance function, Δ*ₜ*[(***x***, *o*), (***x**', o'*)], may represent this difference as a shift in the probability distribution. The weights, *wₘₒ*, allow to learn the correlations between the multiple objective functions for each meta-task, *m,* of the plurality of meta-task, *M.* Further, the weights, *wₘₒ*, provide an interpretable posterior of the target-task model.

Prior to having acquired a target-task dataset, 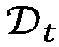 *,* all weights, *wₘₒ*, may be set to ${w}_{mo} = \frac{1}{M}$ and the target-task covariance function, Δ*ₜ*[(***x***, *o*), (***x'**, o*')]*,* may be set to Δ*ₜ* = 0. Then, the acquisition function, *α,* may be applied to determine a new measurement point which then forms the first point of the target-task dataset, 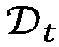 *.* As an example, the acquisition function, *α*, may be an expected hypervolume improvement or a noisy expected hypervolume improvement for which the maximum can be found efficiently using gradient descent with multiple restarts from different starting points.

When having a target-task dataset, 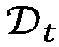 *,* the posterior GP of the target-task multi-objective model may be determined, in 210, by conditioning ***f**ₜ* on the target-task dataset, 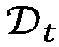 *.* This conditioning may be carried out as usually done for Gaussian processes with the posterior mean function, *m̂ₜₒ*(***x***), and the posterior covariance function, *k̂_{too'}*(*x, x'*), at a query parameter *x* given by: ${\hat{m}}_{to} \left(x\right) = {m}_{to} \left(x\right) + {\sum }_{q , q ′ ∈ O} {k}_{oq} \left(x, {X}_{t}\right) {\left[K\left({X}_{t}, {X}_{t}\right)+{σ}_{t}^{2}I\right]}_{qq ′}^{- 1} \left({y}_{tq ′}-{m}_{q ′}\left({X}_{t}\right)\right)$ ${\hat{k}}_{too ′} \left(x,x′\right) = {k}_{oo ′} \left(x,x′\right) - {\sum }_{q , q ′ ∈ O} {k}_{oq} \left(x, {X}_{t}\right) {\left[K\left({X}_{t}, {X}_{t}\right)+{σ}_{t}^{2}I\right]}_{qq ′}^{- 1} {k}_{q ′ o ′} \left({X}_{t}, x\right)$

The multi-objective Bayesian optimization approach according to method 200 has a computational cost of $Order \left({MO}^{2}{N}_{t}^{2}+{O}^{3}{N}_{t}^{3}\right)$*,* which is cheap to evaluate in the practically relevant regime of *M* ≈ *Nₜ.* Importantly, this computational cost scales favorably (linearly) with the number of meta-tasks, in contrast with conventional GPs, which scale cubically with the total number of points. Since the meta-task GPs are independent of the target task model, they can be computed once and reused during the entire optimization of the target task.

The multi-objective Bayesian optimization approach describe herein may be employed for active learning. In active learning, a model of one or more target variables is typically sought over an entire subset of the parameter space. Such a model can then be used, for example, to operate a system. If, for example, the relationship between the input voltage and the speed of a motor is known, the voltage can be adjusted by model inversion to achieve a desired speed.

In the following, a context of above formulas is described in further detail.

It may be assumed that the meta-task datasets, 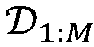 *,* and target- dataset, 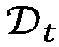 *,* are described jointly by a multi-task covariance function over all tasks and all objectives: $k \left[\left(x, ν, o\right), \left(x′,ν′,o′\right)\right] = {\sum }_{m ∈ M ∪ \left\{t\right\}} {\sum }_{q ∈ O} {\left[{c}_{mq}\right]}_{mo , m ′ o ′} {k}_{mq} \left(x,x′\right)$ (3) where *t* denotes the target index, *m, m'* ∈ 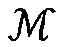 ∪ {*t*} meta-task indices, *o, o'* ∈ 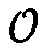 indices of the objective, *k_{mq}* are arbitrary kernel functions and ***C**_{mq}* is a positive semi-definite (coregionalization) matrix. The approach detailed herein allows that transfer from meta-objectives o and o' can happen simultaneously (which is reference [1] incapable of).

Correlations between different meta-tasks may be neglected and each meta-task model may be described by its own covariance function:
Cov(*fₘₒ, f_{m'o'}*) = *δ_{m=m'}kₘ*[(*x, o*), (*x', o'*)] for all *m*, *m'* ∈ 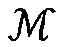 and *o, o'* ∈ 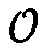 (with *δ*_{*m*=*m'*} being a Kronecker delta that is 1 if m = m' and 0 otherwise). The reason for this assumption is that meta-tasks typically contain significantly more data than target tasks, since they originate from complete optimizations. Learning correlations between different meta-tasks is therefore less useful since the meta-task datasets are usually sufficient to learn the meta-tasks independently. A consequence of this assumption is that the covariance matrix *k*[(***x**, m*, *o*), (***x**', m', o*')] is blockwise diagonal in *m, m'* ∈ 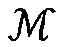 *,* and each block is described by its own covariance function. From this assumption and equation (3) results equation (4): $k \left[\left(x, m, o\right), \left(x′,m′,o′\right)\right] = {δ}_{m = m ′} {\sum }_{q ∈ O} {\left[{h}_{mq}\right]}_{oo ′} {k}_{mq} \left(x,x′\right) ≡ {δ}_{m = m ′} {k}_{m} \left[\left(x, o\right), \left(x′,o′\right)\right]$ (4) where ${\left[{h}_{mq}\right]}_{oo ′} = {\left[{c}_{mq}\right]}_{mo , mo ′} .$

Due to this, the multi-objective Bayesian optimization model described herein scales linearly with the number of meta-tasks, down from a cubic complexity in equation (3). The enhanced scalability presents a unique advantage to the model, which may describe tens and even hundreds of meta-tasks efficiently.

The target-task model may be a sum of weighted meta-task models a residual function, *f̃ₜₒ,* that cannot be explained by weighted meta-task models: *fₜₒ* = *f̃ₜₒ* + 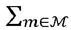 *f̃ₘₒ,* with |Corr(*f̃ₘₒ*, *fₘₒ*)| = 1, Cov(*f̃ₜₒ*, *f_{mo'}*) = 0, **and** Cov(*f̃ₜₒ, f̃_{to'}*) *= kₜ*[(***x**, o*), (***x'**, o*')] for all *m* ∈ 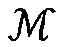 and *o, o'* ∈ 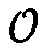 . The residual function, *f̃ₜₒ,* is represented by the target-task covariance function, Δ*ₜ*[(***x**, o*), (***x**', o*')]*.*

This leads to coregionalization matrices ***C**_{mθ}* that are parametrized by unconstrained scalar weights ${w}_{m} ∈ {ℝ}^{O}$ for each meta-task *m* ∈ 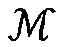 *.* Concretely, the matrices have all zeros except ${\left[{c}_{tq}\right]}_{to , to ′} = {\left[{c}_{tq}\right]}_{to ′ , to} ≡ {\left[{h}_{tq}\right]}_{oo ′}$ ${\left[{c}_{mq}\right]}_{mo , mo ′} = {\left[{c}_{mq}\right]}_{mo ′ , mo} = {\left[{h}_{mq}\right]}_{oo ′}$ ${\left[{c}_{mq}\right]}_{mo , to ′} = {\left[{c}_{mo}\right]}_{to ′ , mo} = {w}_{mo ′} {\left[{h}_{mq}\right]}_{oo ′}$ ${\left[{c}_{mq}\right]}_{to , to ′} = {\left[{c}_{mq}\right]}_{to ′ , to} = {w}_{mo} {w}_{mo ′} {\left[{κ}_{mq}\right]}_{oo ′}$ where [*h_{vq_{oo'}}*] are positive semi-definite in the basis (*o, o'*). This drastically decreases the number of parameters in the coregionalization matrices from Order[(*M* + *O*)³] down to Order[*MO*³], thereby being linear with the number of meta-tasks *M*.

Hence, the coregionalization matrices may populated by *O* × *O* blocks of [*h_{vq_{oo'}}*].

An Example for two meta-tasks and objectives may have the following coregionalization matrices in the basis (m = 1, *o =* 1), (m = 1, *o =* 2), (m = 2, *o* = 1), (m = 2,*o* = 2), (*t*, *o* = 1), (*t*, *o* = 2): ${C}_{1 q} = \left(\begin{matrix}{H}_{1 q} & {0}_{2 \times 2} & \left(\begin{matrix}{w}_{11} & {w}_{12} \\ {w}_{11} & {w}_{12}\end{matrix}\right) ∘ {H}_{1 q} \\ {0}_{2 \times 2} & {0}_{2 \times 2} & {0}_{2 \times 2} \\ \left(\begin{matrix}{w}_{11} & {w}_{11} \\ {w}_{12} & {w}_{12}\end{matrix}\right) ∘ {H}_{1 q} & {0}_{2 \times 2} & \left(\begin{matrix}{w}_{11}^{2} & {w}_{11} {w}_{12} \\ {w}_{11} {w}_{12} & {w}_{12}^{2}\end{matrix}\right) ∘ {H}_{1 q}\end{matrix}\right)$ ${C}_{2 q} = \left(\begin{matrix}{0}_{2 \times 2} & {0}_{2 \times 2} & {0}_{2 \times 2} \\ {0}_{2 \times 2} & {H}_{2 q} & \left(\begin{matrix}{w}_{21} & {w}_{22} \\ {w}_{21} & {w}_{22}\end{matrix}\right) ∘ {H}_{2 q} \\ {0}_{2 \times 2} & \left(\begin{matrix}{w}_{21} & {w}_{21} \\ {w}_{22} & {w}_{22}\end{matrix}\right) ∘ {H}_{2 q} & \left(\begin{matrix}{w}_{21}^{2} & {w}_{21} {w}_{22} \\ {w}_{21} {w}_{22} & {w}_{22}^{2}\end{matrix}\right) ∘ {H}_{2 q}\end{matrix}\right)$ ${C}_{tq} = \left(\begin{matrix}{0}_{2 \times 2} & {0}_{2 \times 2} & {0}_{2 \times 2} \\ {0}_{2 \times 2} & {0}_{2 \times 2} & {0}_{2 \times 2} \\ {0}_{2 \times 2} & {0}_{2 \times 2} & {H}_{tq}\end{matrix}\right)$ where ∘ denotes the Hadamard product. Here, ***H**_{vq}* is matrix notation for [*h_{vq}*]*_{oo'}* and describes the correlations across the multiple objectives.

Using the above example as reference, the first notational simplification for the coregionalization matrices can be done by pulling the common ***H**_{mq}* term outside the matrix. To do this, we introduce a custom matrix product, 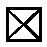 , between matrices ***A*** of size (*α* + *β*) × (*α* + *β*) and *B* of size *β* × *β*. Each *β* × *β* block of matrix ***A*** is Hadamard-multiplied with matrix ***B*** :

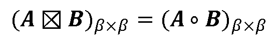

Applying this to the above example yields coregionalization matrices that are described by a 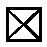 -product between a (*M* + 1)*O* × (*M* + 1)*O* matrix containing only weights, ***W**ᵥ*, and a *O* × *O* matrix ***H**_{vq}* describing task-specific correlations across its objectives:

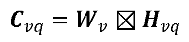

***W**ᵥ* may be written as an outer product, ${w}_{v} {w}_{v}^{T}$*,* where: ${w}_{ν} = {\left({w}_{m}^{T}, {w}_{t}^{T}\right)}^{T}$ ${w}_{m} = {\left(…,{0}_{1 \times O},{{{1}_{1 \times O}}_{︸}}_{m - th entry},{0}_{1 \times O},…,{0}_{1 \times O},{w}_{m 1},{w}_{m 2},…,{w}_{mO}\right)}^{T}$ ${w}_{t} = {\left(…,{0}_{1 \times 0 ,},{1}_{1 \times 0}\right)}^{T} ,$ implying that ***W**ᵥ* is positive semi-definite for all ${w}_{mo} ∈ ℝ$.

Inserting this into equation (4) yields the kernel, ***K***(***x**, **x**'*), of the multi-objective model: 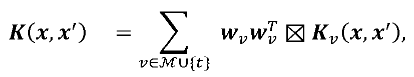 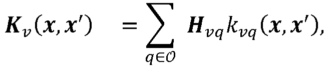 where ***K**ᵥ*(***x**, **x**'*) is a kernel of size *O* × *O* that acts on the objectives of task *v*. Since ***K**ᵥ*(***x**, **x**'*) and ***W**ᵥ* are both positive semi-definite, ***K***(***x**, **x'***) is also positive semi-definite and is therefore a valid kernel. Equally instructive is the same kernel expressed in index notation: $k \left[\left(x, ν, o\right), \left(x′,ν′,o′\right)\right] = {\sum }_{v ∈ M ∪ \left\{t\right\}} {w}_{v} \left(ν, o\right) {w}_{v} \left(ν′,o′\right) {k}_{v} \left[\left(x, o\right), \left(x′,o′\right)\right] ,$ ${w}_{v} \left(ν, o\right) = \left\{\begin{matrix}1 , v = ν \\ {w}_{mo} , \left(v=m\right) ∧ \left(ν=t\right) \\ 0 , otherwise\end{matrix}\right.$

Further, it may be assumed that the parameters of each meta-task model, *θₘ* , depend only on the meta-task dataset, 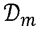 , of this meta-task, m, and are independent of the target dataset, 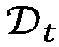 *,* resulting in *p*(*θₘ* I 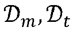 ) = *p*(*θₘ* I 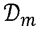 ) for all meta-tasks *m* ∈ 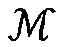 .

As detailed herein, the multi-objective target-task optimization outputs Pareto-optimal points, {***X**ₚ*, ***Y**ₚ*}, as a subset of the target dataset, 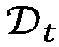 *.* With reference to FIG.1B, one Pareto-optimal point of the Pareto-optimal points may be selected. This selection may be done done by a decision maker (e.g., domain expert or someone who has inside knowledge about the optimization task) who uses preference information to decide which Pareto-optimal point is to be preferred. In non-interactive multi-objective optimization methods, the decision maker intervenes after the optimization is complete. In interactive methods, the decision make may also intervene during the optimization process and provide preference information to guide the optimization.

In some aspects, when measuring the output parameter value(s) of the one or more output parameters 110, only a subset of the multiple objective functions may be observed at each optimization step. In some aspects, multiple new measurement points may be acquired before the target-task multi-objective model is further conditioned on them.

## Claims

1. A method (200) for controlling a physical or chemical process (102), the method (200) comprising:
• providing (202) a plurality of meta-task datasets, wherein each meta-task dataset of the plurality of meta-task datasets comprises measurement data points and/or simulation data points of a respective other process related to the physical or chemical process (102);
• for each meta-task dataset of the plurality of meta-task datasets, determining (204) a respective meta-task multi-objective model comprising a meta-task Gaussian process that represents multiple objective functions and models the respective other process by a meta-task mean function and a meta-task covariance function;
• determining (206) a prior Gaussian process of a target-task multi-objective model (114) that represents the multiple objective functions, wherein a prior mean function of the prior Gaussian process is a weighted sum of the meta-task mean functions using a plurality of weights, and wherein a prior covariance function of the prior Gaussian process is a total of a target-task covariance function and a weighted sum of the meta-task covariance functions using the plurality of weights, wherein the plurality of weights comprises a respective weight for each combination of an objective function of the multiple objective functions and a meta-task dataset of the plurality of meta-task datasets;
• determining (208) an adapted prior Gaussian process by adapting hyperparameters of the prior Gaussian process to increase a likelihood of a target-task dataset which includes measurement data points and/or simulation data points of the physical or chemical process;
• determining (210) a posterior Gaussian process of the target-task multi-objective model (114) by conditioning the adapted prior Gaussian process on the target-task dataset; and
• controlling (212) the physical or chemical process (102) using the posterior Gaussian process.

2. The method (200) according to claim 1,
wherein controlling (212) the physical or chemical process (102) using the posterior Gaussian process comprises:
• determining a respective input parameter value (116) of one or more input parameters (106) of the physical or chemical process by applying a multi-objective acquisition function on the posterior Gaussian process; and
• controlling the physical or chemical process (102) in accordance with the respective input parameter value (116) of the one or more input parameters (106).

3. The method (200) according to claim 1,
wherein controlling (212) the physical or chemical process (102) using the posterior Gaussian process comprises:
• determining Pareto-optimal points which are, according to the posterior Gaussian process, assigned to a desired output value of at least one output parameter (110) of the physical or chemical process (102), wherein each of the Pareto-optimal points comprises a respective input parameter value (116) of one or more input parameters (106) of the physical or chemical process (102);
• selecting a Pareto-optimal point of the Pareto-optimal points ; and
• controlling the physical or chemical process (102) in accordance with the Pareto-optimal point.

4. The method (200) according to any one of claims 1 to 3,
wherein the hyperparameters comprise the target-task covariance function and the plurality of weights.

5. The method (200) according to any one of claims 1 to 4,
wherein each weight of the plurality of weights is equal to or greater than zero.

6. The method (200) according to any one of claims 1 to 5,
wherein determining the weighted sum of the meta-task covariance functions using the plurality of weights comprises that, for each meta-task dataset of the plurality of meta-task datasets, a covariance between two objective functions is weighted by a product of a first weight and a second weight associated with the meta-task dataset, wherein the first weight is associated with one of the two objective functions and the second weight is associated with the other one of the two objective functions.

7. A controller (104) configured to carry out the method (200) of any one of claims 1 to 6.

8. A system (100), comprising:
• a device (102) configured to carry out the physical or chemical process; and
• the controller (104) according to claim 7.

9. A computer program comprising instructions which, when executed by a computer, causes the computer to carry out the method (200) according to any one of claims 1 to 6.

10. A computer-readable medium comprising instructions which, when executed by a computer, causes the computer to carry out the method (200) according to any one of claims 1 to 6.

## Amended claims

### Amended claims in accordance with Rule 137(2) EPC.

1. A method (200) for controlling a physical or chemical process (102), the method (200) comprising:
• providing (202) a plurality of meta-task datasets, wherein each meta-task dataset of the plurality of meta-task datasets comprises measurement data points and/or simulation data points of a respective other process related to the physical or chemical process (102);
• for each meta-task dataset of the plurality of meta-task datasets, determining (204) a respective meta-task multi-objective Bayesian optimization model comprising a meta-task Gaussian process that represents multiple objective functions and models the respective other process by a meta-task mean function and a meta-task covariance function;
• determining (206) a prior Gaussian process of a target-task multi-objective Bayesian optimization model (114) that represents the multiple objective functions, wherein a prior mean function of the prior Gaussian process is a weighted sum of the meta-task mean functions using a plurality of weights, and wherein a prior covariance function of the prior Gaussian process is a total of a target-task covariance function and a weighted sum of the meta-task covariance functions using the plurality of weights, wherein the plurality of weights comprises a respective weight for each combination of an objective function of the multiple objective functions and a meta-task dataset of the plurality of meta-task datasets;
• determining (208) an adapted prior Gaussian process by adapting hyperparameters of the prior Gaussian process to increase a likelihood of a target-task dataset which includes measurement data points and/or simulation data points of the physical or chemical process;
• determining (210) a posterior Gaussian process of the target-task multi-objective Bayesian optimization model (114) by conditioning the adapted prior Gaussian process on the target-task dataset; and
• controlling (212) the physical or chemical process (102) using the posterior Gaussian process.

2. The method (200) according to claim 1,
wherein controlling (212) the physical or chemical process (102) using the posterior Gaussian process comprises:
• determining a respective input parameter value (116) of one or more input parameters (106) of the physical or chemical process by applying a multi-objective acquisition function on the posterior Gaussian process; and
• controlling the physical or chemical process (102) in accordance with the respective input parameter value (116) of the one or more input parameters (106).

3. The method (200) according to claim 1,
wherein controlling (212) the physical or chemical process (102) using the posterior Gaussian process comprises:
• determining Pareto-optimal points which are, according to the posterior Gaussian process, assigned to a desired output value of at least one output parameter (110) of the physical or chemical process (102), wherein each of the Pareto-optimal points comprises a respective input parameter value (116) of one or more input parameters (106) of the physical or chemical process (102);
• selecting a Pareto-optimal point of the Pareto-optimal points ; and
• controlling the physical or chemical process (102) in accordance with the Pareto-optimal point.

4. The method (200) according to any one of claims 1 to 3,
wherein the hyperparameters comprise the target-task covariance function and the plurality of weights.

5. The method (200) according to any one of claims 1 to 4,
wherein each weight of the plurality of weights is equal to or greater than zero.

6. The method (200) according to any one of claims 1 to 5,
wherein determining the weighted sum of the meta-task covariance functions using the plurality of weights comprises that, for each meta-task dataset of the plurality of meta-task datasets, a covariance between two objective functions is weighted by a product of a first weight and a second weight associated with the meta-task dataset, wherein the first weight is associated with one of the two objective functions and the second weight is associated with the other one of the two objective functions.

7. A controller (104) configured to carry out the method (200) of any one of claims 1 to 6.

8. A system (100), comprising:
• a device (102) configured to carry out the physical or chemical process; and
• the controller (104) according to claim 7.

9. A computer program comprising instructions which, when executed by a computer, causes the computer to carry out the method (200) according to any one of claims 1 to 6.

10. A computer-readable medium comprising instructions which, when executed by a computer, causes the computer to carry out the method (200) according to any one of claims 1 to 6.
